(19) **Europäisches Patentamt / European Patent Office / Office européen des brevets**

(11) **EP 2 737 235 B1**

(12) **EUROPEAN PATENT SPECIFICATION**

(45) Date of publication and mention of the grant of the patent:
**07.11.2018  Bulletin 2018/45**

(21) Application number: **12759358.0**

(22) Date of filing: **26.07.2012**

(51) Int Cl.:
**F16K 31/06** (2006.01)

(86) International application number:
**PCT/EP2012/003169**

(87) International publication number:
**WO 2013/013825 (31.01.2013 Gazette 2013/05)**

(54) **SPRING ASSEMBLY WITH A MULTIPLE STAGE FORCE PROFILE**

FEDERANORDNUNG MIT EINEM MEHRSTUFIGEN KRAFTPROFIL

ENSEMBLE RESSORT AVEC PROFIL DE FORCE MULTI-ÉTAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.07.2011  US 201161512497 P**

(43) Date of publication of application:
**04.06.2014  Bulletin 2014/23**

(73) Proprietor: **FAS MEDIC S.A.**
**1607 Palézieux (CH)**

(72) Inventor: **TANARI, Vincent**
**CH-1242 Satigny (CH)**

(74) Representative: **Edson, Russell Gregory et al**
**Withers & Rogers LLP**
**4 More London Riverside**
**London SE1 2AU (GB)**

(56) References cited:
**EP-A2- 1 158 157     WO-A1-2008/028509**
**FR-A1- 2 671 597     US-A- 4 805 871**

EP 2 737 235 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The embodiments described below relate to, springs, and more particularly, to a spring assembly with a multiple stage force profile for use in a valve or the like.

BACKGROUND OF THE INVENTION

Fluid control valves are used in a wide variety of applications to control the flow of a fluid. The fluid being controlled may comprise a gas, a liquid, or a combination thereof. In some situations, the fluid may also include suspended particulates. While fluid control valves vary widely in the specific configuration used to open and close a fluid communication path through the valve, one specific type of valve actuation is performed using a solenoid. In solenoid-actuated valves, the solenoid comprises an electric current that passes through an electromagnetic coil, with the coil typically formed around a magnetic core. The energized solenoid generates a magnetic field. The magnetic field operates on a movable armature connected to a valve member. Typically, the valve also includes a spring or other biasing member that generates a biasing force in opposition to the magnetic field. Therefore, in the absence of a magnetic field generated by the solenoid, the valve member is moved into a normally open or a normally closed position.

Solenoid-actuated valves have several advantages. Solenoid actuated valves can accommodate varying flow rates. Solenoid-actuated valves can form a highly reliable seal, even in the presence of moisture, dirt, debris, etc. Due to the benefits that solenoid-actuated valves provide, they are very popular for industrial applications. However, precise control of the movable armature of the solenoid valve can become difficult in some situations. One reason for the difficulty is that the spring force of the biasing member is generally linearly proportional to distance as illustrated by equation (1).

$$F_{spring} = k^*x \qquad\qquad (1)$$

Where:

$F_{spring}$ is the biasing member's force;
k is a spring constant; and
x is the displacement distance.

In contrast to the generally linear change in force with distance for the biasing member, the solenoid's magnetic force is generally inversely proportional to the distance squared as provided by equation (2).

$$F_{magnet} = \frac{C \times A \times (N \times I)^2}{2x^2} \qquad\qquad (2)$$

Where:

$F_{magnet}$ is the magnetic force;
C is a constant;
A is the cross-sectional area of the solenoid;
N is the number of turns;
I is the current; and
x is the distance between the solenoid and the movable armature.

With the spring force linearly proportional to distance and the magnetic force inversely proportional to the distance squared, precise control can be difficult.

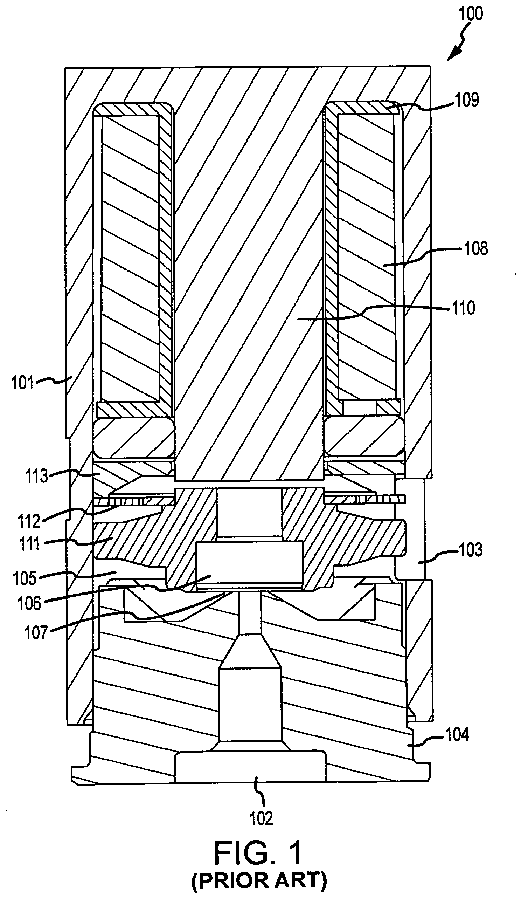

**FIG. 1** shows a cross-sectional view of a prior art solenoid valve 100. The prior art solenoid valve 100 includes a housing 101, a first fluid port 102, a second fluid port 103, a fluid nozzle 104, a fluid chamber 105, a valve member 106, and a valve seat 107. The solenoid valve 100 also includes an electromagnetic coil 108 located in a sleeve 109. Positioned within the coil 108 is a magnetic core 110. The magnetic core 110 may be formed from a material that is magnetically permeable. An example of such a material is ferritic stainless steel. The magnetic core 110 is typically provided to direct and focus the magnetic flux produced by the coil 108. The solenoid valve 100 also includes a movable armature 111. As can be appreciated, as the electromagnetic coil 108 is energized as is known in the art, a magnetic flux is created through the magnetic core 110 thereby biasing the movable armature 111 and the valve member 106 in either a first direction or a second direction. The valve 100 is further shown with a prior art biasing member 112. The biasing member 112 comprises a plate spring that provides a biasing force that is substantially opposite the biasing force provided by the energized coil 108. The biasing member 112 can be held in contact with the movable armature 111 via a contact member 113. As can be appreciated, the biasing member 112 provides a substantially linear biasing force throughout the actuation of the valve 100. With the biasing force being linear, the force applied is merely a function of the distance the movable armature 111 moves as illustrated above in equation (1).

The movable armature 111 is coupled to the valve member 106. The valve member 106 therefore moves in response to the biasing member 112 or the magnetic flux along with the movable armature 111 in order to either open a fluid flow path between the inlet and outlet ports 102, 103 or seal against the valve seat 107 to close the fluid flow path between the inlet and outlet ports 102, 103.

Although the prior art valve can operate adequately in some situations. Other situations may require more precision in controlling the position of the movable armature. For example, it may be desirable in certain situations to provide a first biasing force during a first stroke distance of the movable armature and provide at least a second biasing force during a second stroke distance of the movable armature. The first force may be less than the second force, for example. The change in the biasing force can be used to more precisely control the positioning of the armature. For example, a predetermined current supplied to the solenoid may raise the movable armature to a predetermined position. In order to raise the armature further, a higher current may be required. In an alternative situation, if the spring is utilized in a shock absorber or the like, it may be desirable to absorb low load conditions with small movements and absorb higher load conditions with larger movements.

The embodiments described below overcome these and other problems and an advance in the art is achieved. The embodiments described below provide a spring assembly with a first biasing force during a first actuation stage and a second biasing force during a second actuation stage. Although the biasing forces may comprise substantially linear force profiles during the individual stages, according to an embodiment, the first biasing force and the second biasing force are non-linear with respect to one another. The spring assembly may be incorporated into a valve, such as the valve 100 described above or some other device including a movable armature, such as shock absorbers, piston/cylinder systems, etc.

US4805871 describes an electromagnetic valve having a spring having first and second flexing segments.

SUMMARY OF THE INVENTION

A spring assembly is provided according to an embodiment. The spring assembly comprises a spring including one or more first flexing segments and one or more second flexing segments. According to an embodiment, the spring assembly further comprises a contact member including a plurality of steps. The plurality of steps can contact at least a portion of the spring such that the first and second flexing segments can flex during a first actuation stage thereby providing a first biasing force and at least one of the first flexing segments is prevented from flexing further during a second actuation stage to provide a second biasing force.

A valve is provided according to an embodiment. The valve comprises a housing and a movable armature located within the housing. According to an embodiment, the valve further comprises a spring assembly. The spring assembly includes a spring in contact with the movable armature with one or more first flexing segments and one or more second flexing segments. According to an embodiment, the spring assembly further comprises a contact member including a plurality of steps. The plurality of steps are configured to contact a least a portion of the spring such that the first and second flexing segments flex as the movable armature moves from a first position to a second position to provide a first biasing force and one or more of the first flexing segments is substantially prevented from flexing further as the movable armature moves from the second position to a third position to provide a second biasing force.

A method for biasing an armature with a spring assembly is provided according to an embodiment. The method comprises a step of flexing one or more first flexing segments and one or more second flexing segments of a spring during a first actuation stage to provide a first biasing force. According to an embodiment, the method further comprises a step of restricting further flexing of at least one of the first flexing segments during a second actuation stage to provide a second biasing force.

According to a first aspect of the invention, a spring assembly comprises:

a spring including one or more first flexing segments and one or more second flexing segments; and
a contact member including a plurality of steps for contacting at least a portion of the spring such that the first and second flexing segments can flex during a first actuation stage thereby providing a first biasing force and at least one of the first flexing segments is prevented from flexing further during a second actuation stage to provide a second biasing force, the second biasing force being higher than the first biasing force.

Preferably, a second step of the contact member contacts all of the first flexing segments during the second actuation stage to prevent the first flexing segments from flexing further while allowing the second flexing segments to flex further.

Preferably, the spring assembly further comprises an armature aperture formed in the spring for receiving at least a portion of a movable armature.

Preferably, the movable armature moves from a first position to a second position during the first actuation stage and moves from the second position to a third position during the second actuation stage.

Preferably, changes in the first and second biasing forces throughout the first and second actuation stages are generally non-linear with respect to one another.

Preferably, the spring comprises a plate spring.

There may be provided a valve comprising:

a housing;
a movable armature located within the housing;
a spring assembly including:

a spring of the first aspect in contact with the movable armature with one or more first flexing segments and one or more second flexing segments;
a contact member of the first aspect, wherein the plurality of steps are configured to contact a least a portion of the spring such that the first and second flexing segments flex as the movable armature moves from a first position to a second position to provide the first biasing force and one or more of the first flexing segments is substantially prevented from flexing further as the movable armature moves from the second position to a third position to provide the second biasing force.

Preferably, the valve further comprises an armature aperture formed in the spring for receiving at least a portion of the movable armature.

Preferably, a second step of the contact member contacts all of the first flexing segments during the second actuation stage to prevent the first flexing segments from flexing further while allowing the second flexing segments to flex further.

Preferably, the spring comprises a plate spring.

Preferably, changes in the first and second biasing forces throughout the first and second actuation stages are generally non-linear with respect to one another.

According to another aspect, a method for biasing an armature with a spring assembly comprises steps of:

flexing one or more first flexing segments and one or more second flexing segments of a spring during a first actuation stage to provide a first biasing force; and
restricting further flexing of at least one of the first flexing segments during a second actuation stage to provide a second biasing force, the second biasing force being higher than the first biasing force.

Preferably, the step of restricting comprises contacting one or more of the first flexing segments with a step formed on a contact member.

Preferably, a movable armature actuates from a first position to a second position during the first actuation stage and actuates from the second position to a third position during the second actuation stage.

Preferably, changes in the first and second biasing forces throughout the first and second actuation stages are generally non-linear with respect to one another.

## BRIEF DESCRIPTION OF THE DRAWINGS

FIG. 1 shows a prior art valve.
FIG. 2a shows a valve with a spring assembly according to an embodiment.
FIG. 2b shows an enlarged view of the spring assembly according to an embodiment.
FIG. 2c shows an enlarged view of the spring assembly according to another embodiment.
FIG. 3 shows a partial cross-sectional view of the spring assembly according to an embodiment.
FIG. 4 shows a force profile of the spring assembly during two actuation stages according to an embodiment.
FIG. 5a shows a partial top view of the spring according to an embodiment.
FIG. 5b shows a partial cross-sectional view of the spring assembly according to an embodiment.

DETAILED DESCRIPTION OF THE INVENTION

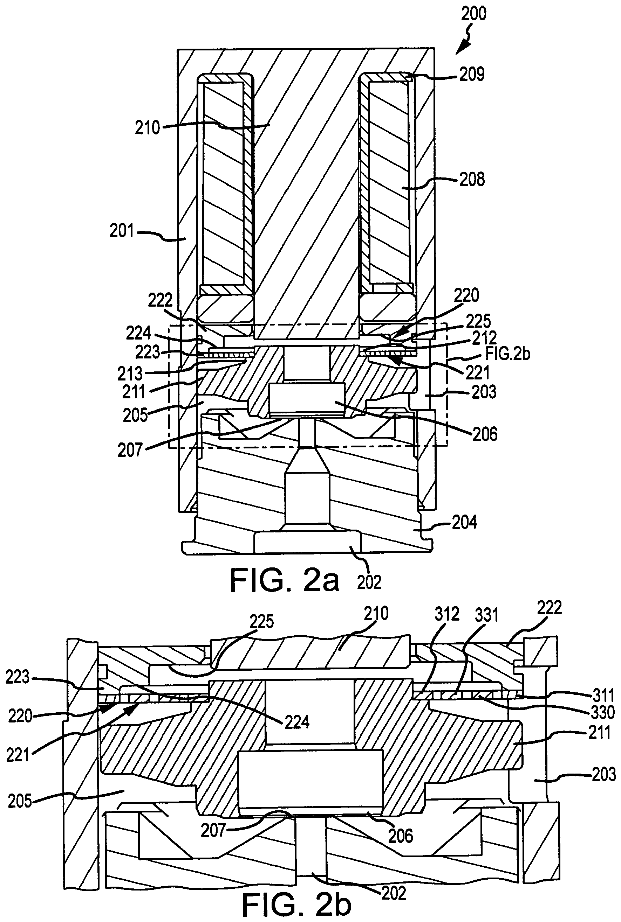

FIGS. 2a - 5b and the following description depict specific examples to teach those skilled in the art how to make and use the best mode of embodiments of a spring assembly. For the purpose of teaching inventive principles, some conventional aspects have been simplified or omitted. Those skilled in the art will appreciate variations from these examples that fall within the scope of the present description. Those skilled in the art will appreciate that the features described below can be combined in various ways to form multiple variations of the spring assembly. As a result, the embodiments described below are not limited to the specific examples described below, but only by the claims and their equivalents.

**FIG. 2a** shows a cross-sectional view of a valve 200 according to an embodiment. Although the valve 200 is shown as comprising a solenoid actuated valve, other types of valves may be used. Therefore, the valve 200 should in no way be limited to solenoid actuated valves. The valve 200 comprises a housing 201, a first fluid port 202, a second fluid port 203, a fluid nozzle 204, a fluid chamber 205, a valve member 206, and a valve seat 207. The solenoid valve 200 also includes an electromagnetic coil 208 located in a sleeve 209. Positioned within the coil 208 is a magnetic core 210. The magnetic core 210 may be formed from a material that is magnetically permeable. An example of such a material is ferritic stainless steel. The magnetic core 210 is typically provided to direct and focus the magnetic flux produced by the coil 208. The solenoid valve 200 also includes a movable armature 211, which interacts with a spring assembly 220. An enlarged view of the spring assembly 220 is shown in FIG. 2b. As can be appreciated, when the electromagnetic coil 208 is energized as is known in the art, a magnetic flux is created through the magnetic core 210 thereby biasing the movable armature 211 and the valve member 206 in either a first direction or a second direction. The spring assembly 220 generally biases the movable armature 211 and the valve member 206 opposite the biasing force provided by the electromagnetic coil 208.

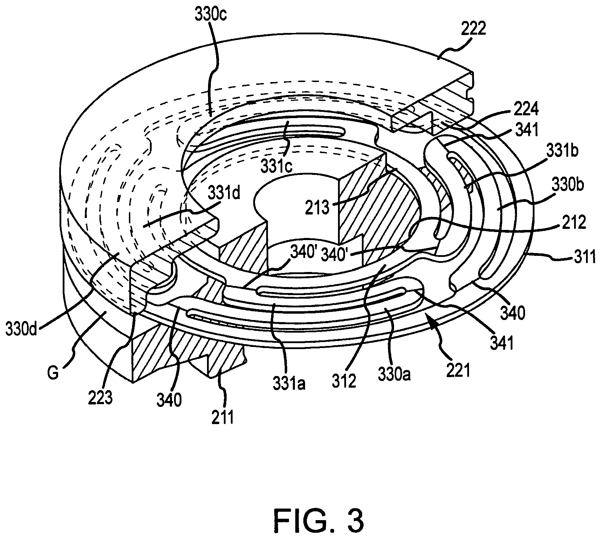

According to an embodiment, the spring assembly 220 comprises a spring 221 and a contact member 222. In the embodiment shown, the spring 221 comprises a plate spring; however, those skilled in the art will recognize other types of springs that may be utilized while remaining within the scope of the embodiment. According to an embodiment, at least a portion of the movable armature 211 extends through an armature aperture 212 formed in the spring 221. The armature 211 includes a support ledge 213 that can limit the upward movement of the armature 211 within the armature aperture 212 by contacting an inner radial portion 312 of the spring (See FIGS. 2b & 3). Once the support ledge 213 contacts the inner radial portion of the spring, further upward movement of the armature is partially opposed by the spring 221 as at least a portion of the spring 221 flexes. As can be appreciated, the resiliency of the spring allows numerous actuations without permanently deforming the spring's shape. The use of "contact" throughout the present description should in no way be limited to direct physical contact. Rather, intermediary components may be positioned between the components that are in "contact" with one another while remaining within the scope of the present embodiment.

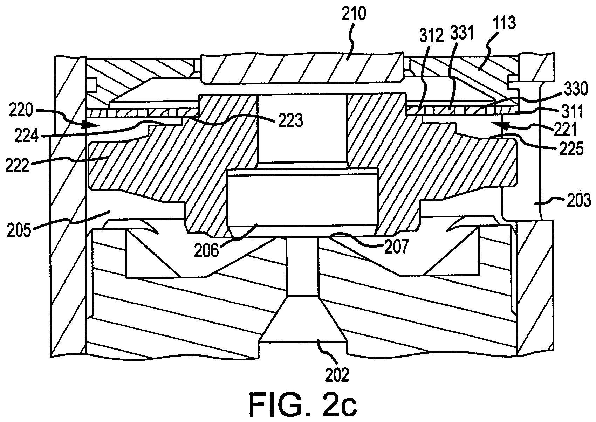

According to an embodiment, the contact member 222 is configured to contact the spring 221 at one or more contact points or regions. In the embodiment shown, the contact member 222 comprises a plurality of steps 223, 224, 225, which are configured to contact various portions of the spring 221 at different displacement distances, thereby creating two or more actuation stages. In the embodiment shown, the first step 223 contacts an outer radial section 311 (See FIGS. 2b & 3) of the spring 221 substantially constantly. In some embodiments, the first step 223 can retain at least a portion of the spring 221 in a substantially constant position. In the embodiment shown, the outer radial section 311 is maintained in the substantially constant position with respect to the armature 211. As can be seen, the contact member 222 can be coupled to the housing 201 or another structure that remains substantially stationary with respect to the armature 211. The stationary contact member 222 prevents the entire spring 221 from simply rising with the armature 211 and not flexing to provide a biasing force. Therefore, the spring 221 can be sandwiched between the movable armature 211 and the first step 223 of the contact member 222 with the spring 221 contacting the movable armature 211 on a first side and contacting the contact member 222 on a second side. In alternative embodiments, spring may be sandwiched between the prior art contact member 113 and the contact member 222 as shown in FIG. 2c. A shown, in this embodiment, the contact member 222 can be movable and essentially replace the movable armature 211. The contact member 222 may thus be coupled to the valve member 206 to provide a valve function. Alternatively, the contact member 222 can be coupled to a top of the movable armature 211; however, turned upside down as shown in the figures, such that the steps 223, 224, 225 can still contact the spring 221 at various portions during different displacement distances to create the two or more actuation stages. In the embodiment shown in FIG. 2c, as the movable contact member 222 moves a predetermined distance to perform a valve function, the second step 224 contacts at least a portion of the spring 221 to create two or more actuation stages.

In the embodiment shown, the first step 223 contacts the outer radial section on the first side while the movable armature 211 contacts the inner radial section on the second side of the spring 221. As can be appreciated, the positioning of the contact member 222 may be adjusted in order to control the amount of flex experienced by the spring during actuation of the armature 211 and thus, the biasing force acting on the armature 211.

**FIG. 3** shows a partial cross-sectional view of the spring assembly 220 with a portion of the movable armature 211 received by the armature aperture 212 according to an embodiment. It should be appreciated that although an armature aperture 212 is shown and described, in other embodiments the armature 211 may not be received by the spring 221, but rather, may simply contact and act on a face of the spring 221. For example, in the embodiment shown, the armature 211 could simply press on the bottom face of the spring 221 as shown in the figure. Therefore, the aperture 212 may not be included and rather, the spring 212 may comprise a solid center section. This may be useful in alternative embodiments where the armature 211 does not comprise a portion of a valve.

In FIG. 3, the spring 221 is not cross-sectioned in order to illustrate various components that are difficult to see while covered by the contact member 222. According to an embodiment, the spring 221 comprises one or more first flexing segments 330a-330d and one or more second flexing segments 331a-331d. Although only two flexing segments are shown and discussed below, in other embodiments, more than two flexing segments may be provided. As shown in FIG. 3, there is a gap, G, between the outer radial section 311 and the armature 211 that allows the armature 211 to move upwards towards the contact member 222 and flex the spring 221.

According to an embodiment, the contact member 222 is configured such that when the movable armature 211 moves between a first position and a second position, the first and second flexing segments 330a-330d, 331a-330d are free to move. According to an embodiment, the first and second flexing segments 330, 331 are coupled together such that the two flexing segments 330, 331 can flex in unison when the armature 211 moves between the first position and the second position. In the embodiment shown, this is illustrated as the section of the spring 221 between the outer radial section 311 held by the first step 223 of the contact member 222 and the inner radial section 312 contacting the support ledge 212 of the movable armature 211. Approximate pivot points for the first and second flexing segments 330a, 330b and 331a, 331b, are shown at 340, 340', respectively. Consequently, with both first and second flexing segments 330, 331 able to flex, a first biasing force is provided by the spring 221 as the movable armature 211 moves from a first position to a second position during a first actuation stage. According to an embodiment, the first biasing force acts to bias the armature 211 downward as shown in the figures.

According to an embodiment, further movement of the movable armature 211 from the second position to a third position results in at least one of the one or more first flexing segments 330a-330d being substantially prevented from flexing further due to contact with the second step 224 of the contact member 222. An approximate contact point with the second step 224 is shown at 341 for the first flexing segments 330a, 330b. With the support ledge 311 of the movable armature 211 still contacting the second flexing segment at point 340', the portion of the spring 221 between contact points 340' and 341 are still free to flex, *i.e.*, the one or more second flexing segments 331a-331d during actuation from the second position to the third position. As can be appreciated, with only the second flexing segments 331a-331d free to flex, a second biasing force is provided by the spring 221 as the movable armature 211 moves from the second position to the third position. According to an embodiment, the second biasing force acts to bias the armature 211 downward as shown in the figures.

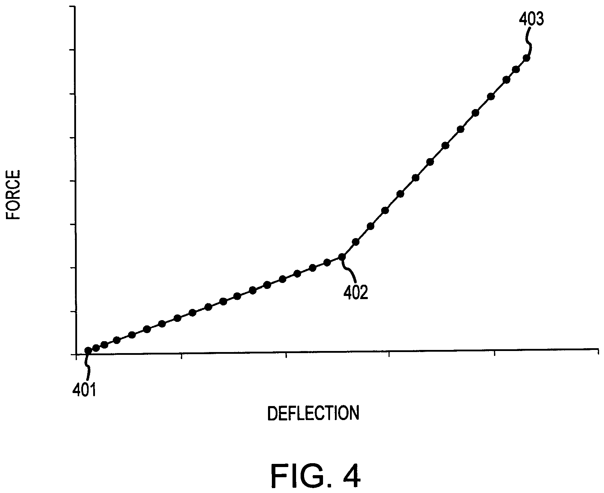

As can be appreciated, with a substantially smaller section of the spring 221 free to flex in response to the movement of the movable armature 211, the second biasing force is larger than the first biasing force. According to an embodiment, the first and second biasing forces are non-linear with respect to one another as shown in FIG. 4.

In the embodiment shown, the second step 224 extends substantially entirely around the contact member 222 in order to prevent all of the first flexing segments 330a-330d from flexing as the movable armature 211 moves from the second position to the third position. However, in other embodiments, the second step 224 may be discontinuous in order to allow one or more of the first flexing segments 330a-330d to continue moving past the second position. For example, the first flexing segments 330a, 330c may be prevented from flexing further while the first flexing segments 330b, 330d may be free to flex past the second position. Another step may be provided that contacts the first flexing segments 330b, 330d at a third position and prevents further flexing as the armature 211 moves from the third position to a fourth position, for example. This configuration can allow more than one actuation stage and more than two biasing forces throughout the range of motion of the movable armature 211. Another way to achieve more than two biasing forces would be to include more than two flexing segments with each flexing segment including its own step formed in the contact member 222.

**FIG. 4** shows a graph of the spring's biasing force as a function of distance traveled by the movable armature 211 and thus, flexing of the spring 221. As the movable armature 211 moves from the first position 401 to the second position 402, the biasing force of the spring 221 provides a substantially linear increase in force that is approximately proportional to distance. However, once the moveable armature 211 reaches the second position and one or more of the first flexing segments 330a-330d are prevented from flexing further, the biasing force increases in slope with respect to distance. Although the biasing force between the second position 402 and the third position 403 is approximately linear, the biasing force during the first actuation stage is non-linear with respect to the biasing force during the second actuation stage. The increase in the slope of the force with respect to distance is essentially equivalent to changing the spring constant of the spring 221, although the structure and material of the spring 221 remains the same.

As can be appreciated, in embodiments where the spring assembly 220 is incorporated into the valve 200, the power supplied to the coil 208 may need to be increased in order to continue actuation beyond the second position due to the increased biasing force despite the distance between the armature 211 and the coil 208 decreasing.

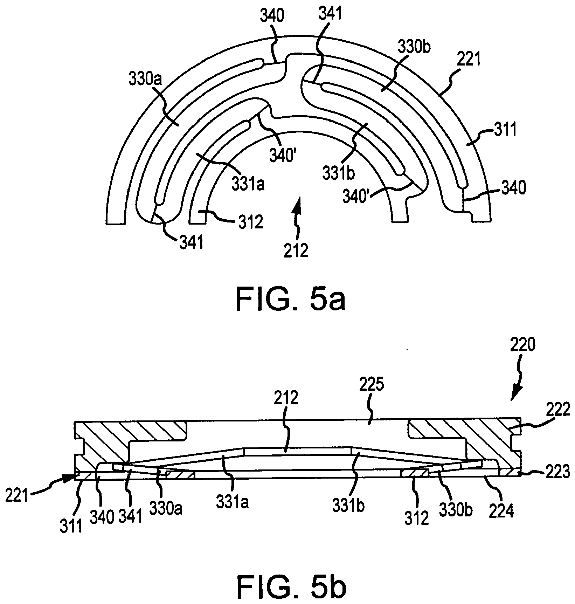

**FIG. 5a** is a top view of a portion of the spring 221 according to an embodiment. In FIG. 5a, the first and second flexing segments 330, 331 can be seen easier. The approximate contact points are also shown. FIG. 5b shows a cross-sectional view of the spring 221 and the contact member 222. In FIG. 5b, the spring 221 is shown moved to the second actuation stage by the armature 211 (not shown in FIG. 5b). As shown, the first flexing portions 330a, 330b have contacted the second step 224 and cannot be flexed any further. In contrast, the second flexing portions 331a, 331b have continued to flex in response to the armature's movement towards the third position.

Although the above description has referred to the spring assembly 220 as being positioned within a valve for consistency and ease of understanding, it should be appreciated that the spring assembly 220 is not limited to applications with a valve. Rather, the spring assembly 220 may be utilized in any type of device that includes a movable armature capable of moving the spring 221 with respect to the stationary contact member 222. Examples include shocks, piston/cylinders, etc.

The embodiments described above improve the control that is possible when actuating a movable armature by providing at least two actuation stages. Each actuation stage includes its own biasing force. Although the first and second biasing forces may be linear within a given actuation stage, the first and second biasing forces are generally non-linear with respect to one another.

The detailed descriptions of the above embodiments are not exhaustive descriptions of all embodiments contemplated by the inventors to be within the scope of the present description. Indeed, persons skilled in the art will recognize that certain elements of the above-described embodiments may variously be combined or eliminated to create further embodiments, and such further embodiments fall within the scope and teachings of the present description. It will also be apparent to those of ordinary skill in the art that the above-described embodiments may be combined in whole or in part to create additional embodiments within the scope and teachings of the present description.

Thus, although specific embodiments of, and examples for, the spring assembly are described herein for illustrative purposes, various equivalent modifications are possible within the scope of the present description, as those skilled in the relevant art will recognize. The teachings provided herein can be applied to other systems, and not just to the embodiments described above and shown in the accompanying figures. Accordingly, the scope of the invention should be determined from the following claims.

## Claims

1.   A spring assembly (220), comprising:

a spring (221) including one or more first flexing segments (330a-330d) and one or more second flexing segments (331a-331d), **characterized by**
a contact member (222) including a plurality of steps (223-225) for contacting at least a portion of the spring (221) such that the first and second flexing segments (330a-330d, 331a-331d) can flex during a first actuation stage thereby providing a first biasing force and at least one of the first flexing segments (330a-330d) is prevented from flexing further during a second actuation stage to provide a second biasing force, the second biasing force being higher than the first biasing force.

2.   The spring assembly (220) of claim 1, wherein a second step (224) of the contact member (222) contacts all of the first flexing segments (330a-330d) during the second actuation stage to prevent the first flexing segments (330a-330d) from flexing further while allowing the second flexing segments (331a-331d) to flex further.

3.   The spring assembly (220) of claim 1, further comprising an armature aperture (212) formed in the spring (221) for receiving at least a portion of a movable armature (211).

4.   The spring assembly (220) of claim 3, wherein the movable armature (211) moves from a first position to a second position during the first actuation stage and moves from the second position to a third position during the second actuation stage.

5.   The spring assembly (220) of claim 1, wherein changes in the first and second biasing forces throughout the first and second actuation stages are generally non-linear with respect to one another.

6.   The spring assembly (220) of claim 1, wherein the spring (221) comprises a plate spring.

7. A valve (200), comprising:

   a housing (201);
   a movable armature (211) located within the housing (201);
   a spring assembly (220) including:

      a spring (221) as defined in claim 1, in contact with the movable armature (211); and
      a contact member (222) as defined in claim 1, wherein the plurality of steps (223-225) are configured to contact a least a portion of the spring such that the first and second flexing segments (330a-330d, 331a-331d) flex as the movable armature (211) moves from a first position to a second position to provide the first biasing force and one or more of the first flexing segments (330a-330d) is substantially prevented from flexing further as the movable armature (211) moves from the second position to a third position to provide the second biasing force.

8. The valve (200) of claim 7, further comprising an armature aperture (212) formed in the spring (221) for receiving at least a portion of the movable armature (211).

9. The valve (200) of claim 7, wherein a second step (224) of the contact member (222) contacts all of the first flexing segments (330a-330d) during the second actuation stage to prevent the first flexing segments (330a-330d) from flexing further while allowing the second flexing segments (331a-331d) to flex further.

10. The valve (200) of claim 7, wherein the spring (221) comprises a plate spring.

11. The valve (200) of claim 7, wherein changes in the first and second biasing forces throughout the first and second actuation stages are generally non-linear with respect to one another.

12. A method for biasing an armature with a spring assembly, comprising steps of:

    flexing one or more first flexing segments and one or more second flexing segments of a spring during a first actuation stage to provide a first biasing force; and
    restricting further flexing of at least one of the first flexing segments during a second actuation stage to provide a second biasing force, the second biasing force being higher than the first biasing force.

13. The method of claim 12, wherein the step of restricting comprises contacting one or more of the first flexing segments with a step formed on a contact member.

14. The method of claim 12, wherein a movable armature actuates from a first position to a second position during the first actuation stage and actuates from the second position to a third position during the second actuation stage.

15. The method of claim 12, wherein changes in the first and second biasing forces throughout the first and second actuation stages are generally non-linear with respect to one another.


**Patentansprüche**

1. Federanordnung (220) mit:

   einer Feder (221) mit einem oder mehreren ersten Biegesegmenten (330a-330d) und einem oder mehreren zweiten Biegesegmenten (331a-331d), **gekennzeichnet durch**
   ein Kontaktteil (222) mit mehreren Stufen (223-225) zum Kontaktieren mindestens eines Abschnitts der Feder (221) derart, dass sich die ersten und zweiten Biegesegmente (330a-330d, 331a-331d) während einer ersten Betätigungsphase biegen können, wodurch sie eine erste Vorspannkraft erzeugen, und dass mindestens eines der ersten Biegesegmente (330a-330d) während einer zweiten Betätigungsphase daran gehindert wird, sich weiter zu biegen, um eine zweite Biegekraft zu erzeugen, wobei die zweite Biegekraft stärker als die erste Biegekraft ist.

2. Federanordnung (220) nach Anspruch 1, bei der eine zweite Stufe (224) des Kontaktteils (222) während der zweiten Betätigungsphase sämtliche der ersten Biegesegmente (330a-330d) kontaktiert, um die ersten Biegesegmente (330a-330d) daran zu hindern, sich weiter zu biegen, während sie ein weiteres Biegen der zweiten Biegesegmente (331a-331d) zulässt.

3. Federanordnung (220) nach Anspruch 1, ferner mit einer in der Feder (221) ausgebildeten Armaturöffnung (212) zur Aufnahme mindestens eines Abschnitts einer bewegbaren Armatur (211).

4. Federanordnung (220) nach Anspruch 3, bei der sich die bewegbare Armatur (211) während der ersten Betätigungsphase aus einer ersten Position in eine zweite Position bewegt und sich während der zweiten Betätigungsphase aus der zweiten Position in eine dritte Position bewegt.

5. Federanordnung (220) nach Anspruch 1, bei der über die ersten und zweiten Betätigungsphasen hinweg Veränderungen der ersten und zweiten Vorspannkräfte im Wesentlichen nonlinear relativ zueinander sind.

6. Federanordnung (220) nach Anspruch 1, bei der die Feder (221) eine Plattenfeder aufweist.

7. Ventil (200) mit:

einem Gehäuse (201);
einer in dem Gehäuse (201) angeordneten bewegbaren Armatur (211);
einer Federanordnung (220) mit:

einer Feder (221) gemäß Anspruch 1, die sich in Kontakt mit der bewegbaren Armatur (211) befindet; und
einem Kontaktteil (222) gemäß Anspruch 1, bei dem die mehreren Stufen (223-225) konfiguriert sind zum Kontaktieren mindestens eines Abschnitts der Feder derart, dass die ersten und zweiten Biegesegmente (330a-330d, 331a-331d) sich biegen, wenn sich die bewegbare Armatur (211) aus einer ersten Position in eine zweite Position bewegt, um die erste Vorspannkraft zu erzeugen, und eines oder mehrere der ersten Biegesegmente (330a-330d) im Wesentlichen daran gehindert wird, sich weiter zu biegen, wenn sich die bewegbare Armatur (211) aus der zweiten Position in eine dritte Position bewegt, um die zweite Biegekraft zu erzeugen.

8. Ventil (200) nach Anspruch 7, ferner mit einer in der Feder (221) ausgebildeten Armaturöffnung (212) zur Aufnahme mindestens eines Abschnitts der bewegbaren Armatur (211).

9. Ventil (200) nach Anspruch 7, bei dem eine zweite Stufe (224) des Kontaktteils (222) während der zweiten Betätigungsphase sämtliche der ersten Biegesegmente (330a-330d) kontaktiert, um die ersten Biegesegmente (330a-330d) daran zu hindern, sich weiter zu biegen, während sie ein weiteres Biegen der zweiten Biegesegmente (331a-331d) zulässt.

10. Ventil (200) nach Anspruch 7, bei dem die Feder (221) eine Plattenfeder aufweist.

11. Ventil (200) nach Anspruch 7, bei dem ber die ersten und zweiten Betätigungsphasen hinweg Veränderungen der ersten und zweiten Vorspannkräfte im Wesentlichen nonlinear relativ zueinander sind.

12. Verfahren zum Vorspannen einer Armatur mittels einer Federanordnung, mit den Schritten:

Biegen eines oder mehrerer erster Biegesegmente und eines oder mehrerer zweiter Biegesegmente einer Feder während einer ersten Betätigungsphase, um eine erste Vorspannkraft zu erzeugen; und
Einschränken eines weiteren Biegens mindestens eines der erster Biegesegmente während einer zweiten Betätigungsphase, um eine zweite Vorspannkraft zu erzeugen, wobei die zweite Biegekraft stärker als die erste Biegekraft ist.

13. Verfahren nach Anspruch 12, bei dem der Schritt des Einschränkens das Kontaktieren eines oder mehrerer der ersten Biegesegmente mit einer an einem Kontaktteil ausgebildeten Stufe umfasst.

14. Verfahren nach Anspruch 12, bei dem sich eine bewegbare Armatur während der ersten Betätigungsphase aus einer ersten Position in eine zweite Position bewegt und sich während der zweiten Betätigungsphase aus der zweiten Position in eine dritte Position bewegt.

**15.** Verfahren nach Anspruch 12, bei dem über die ersten und zweiten Betätigungsphasen hinweg Veränderungen der ersten und zweiten Vorspannkräfte im Wesentlichen nonlinear relativ zueinander sind.

**Revendications**

**1.** Ensemble ressort (220) comprenant :

un ressort (221) ayant un ou plusieurs premiers éléments flexibles (330a-330d) et un ou plusieurs seconds segments flexibles (331a-331d), **caractérisé par**
un élément de contact (222) ayant un ensemble de gradins (223-225) pour toucher au moins une partie du ressort (221) de façon que les premiers et les seconds éléments flexibles (300a-330d, 331a-331d), puissent fléchir au cours du premier étage d'actionnement et générer ainsi une première force de contrainte et au moins un des premiers segments flexibles (330a-330d) ne fléchie pas plus au cours du second étage actionnement pour créer une seconde force de contrainte, cette seconde force de contrainte étant plus grande que la première force de contrainte.

**2.** Ensemble ressort (220) selon la revendication 1,
dans lequel un second gradin (224) de élément contact (222) est en contact avec tous les premiers segments flexibles (330a-330d) au cours du second étage d'actionnement pour éviter que les premiers segments flexibles (330a-330d) ne fléchissent plus, tout en permettant aux seconds segments flexibles (331a-331d) de fléchir plus.

**3.** Ensemble ressort (220) selon la revendication 1,
comprenant en outre une ouverture d'armature (212) réalisée dans le ressort (221) pour recevoir au moins une partie d'une armature mobile (211).

**4.** Ensemble ressort (220) selon la revendication 3,
dans lequel l'armature mobile (211) se déplace à partir d'une première position et une seconde position au cours du premier étage de manoeuvre et elle se déplace de la seconde position vers une troisième position au cours du second étage de manoeuvre.

**5.** Ensemble ressort (220) selon la revendication 1,
selon lequel les changements de la première et la seconde forces de contrainte au cours du premier et du second étages d'actionnement sont de façon générales non-linéaires l'une par rapport à l'autre.

**6.** Ensemble ressort (220) selon la revendication 1,
dans lequel le ressort (221) comporte une plaque-ressort.

**7.** Soupape (200), comprenant :

- un boîtier (201),
- une armature mobile (211) logée dans le boîtier (201),
- un ensemble de ressorts (220) ayant,

• un ressort (221) tel que défini à la revendication 1, au contact avec l'armature mobile (211), et
• un élément de contact (222) tel que défini dans la revendication 1, et dans lequel l'ensemble des gradins (223-225) est configuré pour entrer en contact avec au moins une partie du ressort de façon que les premiers et les seconds segments flexibles (330a-330d, 331a-331d) fléchissent lorsque l'armature mobile (211) se déplace d'une première position à une seconde position pour créer la première force de contrainte et un/ou plusieurs des premiers segments flexibles (330a-330d) sont bloqués en flexion pendant que l'armature mobile (211) passe de la première position à la troisième position pour créer la seconde force contrainte.

**8.** Soupape (200) selon la revendication 7,
comprenant en outre une ouverture d'armature (212) réalisée dans le ressort (221) pour recevoir au moins une partie de l'armature mobile (211).

**9.** Soupape (200) selon la revendication 7,
dans laquelle un second gradin (224) de l'organe de contact (222) vient en contact avec tous les premiers segments flexibles (330a-330d) au cours du second étage de manoeuvre pour éviter que les premiers segments flexibles (330a-330d) ne soient fléchis encore plus, tout en permettant aux seconds segments flexibles (331a-331d) de continuer à fléchir.

10. Soupape (220) selon la revendication 7,
dans lequel le ressort (221) comporte un ressort plat.

11. Soupape (200) selon la revendication 7,
dans laquelle les changements de la première et de la seconde force de poussée au cours du premier et du second étages de manoeuvre sont de façon générale non-linéaires l'une par rapport à l'autre.

12. Procédé de mise en contrainte d'une armature avec un ensemble ressort comprenant les étapes consistant à faire fléchir un ou plusieurs premiers segments flexibles et un ou plusieurs seconds segments flexibles d'un ressort au cours d'une première étape d'actionnement pour créer une première force de contraintes, et
limiter tout flexion au moins sur le premier élément flexible au cours d'un second étage d'actionnement pour créer une seconde force de contrainte,
cette seconde force de contrainte étant supérieure à la première force de contrainte.

13. Procédé selon la revendication 12,
selon lequel l'étape de restriction consiste à entrée en contact avec un ou plusieurs premiers segments flexibles avec un gradin formé sur l'élément de contact.

14. Procédé selon la revendication 12,
selon lequel une armature mobile passe une première position à une seconde position pour un premier étage de manoeuvre et passe la seconde position, la troisième position au cours du second étage d'actionnement.

15. Procédé selon la revendication 12,
selon lequel les changements des premières et secondes forces de contrainte au cours du premier du second étages actionnement sont de façon générale non-linéaires l'un par rapport à l'autre.

## FIG. 1
### (PRIOR ART)

FIG. 2a

FIG. 2b

FIG. 2c

FIG. 3

FIG. 4

**FIG. 5a**

**FIG. 5b**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4805871 A